# EUROPÄISCHE PATENTSCHRIFT

(11) **EP 0 681 759 B1**
(45) Veröffentlichungstag und Bekanntmachung des Hinweises auf die Patenterteilung: **23.04.1997**
(21) Anmeldenummer: 94906143.6
(22) Anmeldetag: 25.01.1994
(51) Int. Cl.: H02M 7/523, H02M 1/08, G05F 1/613

(54) **RESONANTER WECHSELRICHTER**
RESONANT INVERSE RECTIFIER
ONDULEUR RESONNANT

(30) Priorität: 26.01.1993 DE 4302056
(43) Veröffentlichungstag der Anmeldung: 15.11.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: RADECKER, Matthias, D-47058 Duisburg (DE); FIEDLER, Horst-Lothar, D-44791 Bochum (DE)
(74) Vertreter: Schoppe, Fritz, Dipl.-Ing.
(86) Internationale Anmeldenummer: EP9400196
(87) Internationale Veröffentlichungsnummer: WO9417585

(56) Entgegenhaltungen:
- EP-A- 0 180 966
- DE-A- 4 123 416
- US-A- 4 413 313
- US-A- 5 032 972
- US-A- 5 179 511

## Beschreibung

Die vorliegende Erfindung betrifft einen resonanten Wechselrichter mit einem Schwingkreis, einer Quelle, einer elektronischen Schaltereinrichtung und einer Ansteuerschaltung nach dem Oberbegriff des Patentanspruchs 1.

Allgemein befaßt sich die Erfindung mit einem resonanten Wechselrichter der Klasse E beispielsweise in Form eines Oszillators oder eines selbsterregten Schmalband-Hochfrequenzverstärkers zum Treiben einer rein ohmischen Last, einer ohmisch-kapazitiven Last oder einer ohmisch-induktiven Last.

Wechselrichter bzw. Schaltnetzteile werden unabhängig davon, ob sie mit einem Resonanzkreis arbeiten oder ohne einen Resonanzkreis auskommen, in der Regel mit bipolaren Bauelementen ausgeführt. Eine beispielshafte Ausführungsform eines derartigen bekannten Wechselrichters ist in folgender Firmenschrift geoffenbart: S. Lowbridge, M. Maytum, K. Rutgers: Electronic Ballasts for Flourescent Lamps using BUL 770/791 Transistors (Texas Instruments, 1992). Bei diesem Wechselrichter handelt es sich um eine selbsterregte Halbbrückenschaltung, die mit bipolaren Transistoren, Reversdioden, einem Serienresonanzkreis und mit einer induktiven Basisrückkopplung arbeitet. Eine solche Schaltung wird auch als Verstärker der Klasse D eingeordnet. Wegen des verlustbehafteten Ausräumens der Minoritätsladungsträger der bipolaren Bauelemente können derartige Schaltungen nur bis zu einer bestimmten maximalen Frequenz betrieben werden. Auch bei Verwendung von minoritätsladungsträgerfreien MOS-Transistoren haben derartige Schaltungen den Nachteil kapazitiver Ausräumverluste, da die Schalterelemente unter Spannung eingeschaltet werden müssen. Neben den erläuterten Verlusten und frequenzmäßigen Begrenzungen bestehen weitere Nachteile derartiger Wechselrichter in dem hohen erforderlichen Bauelementeaufwand sowie darin, daß es nicht möglich ist, auf einfache Weise eine Lastregelung zu implementieren.

Aus der Fachveröffentlichung N.O. Sokal, A.D. Sokal: Class E - A new Class of High Efficiency Tuned Single-Ended Switching Power Amplifiers (IEEE Journal of Solid-State Circuits, Band SC-10, Nr. 3, Juni 1975) sind Hochfrequenzverstärker der sog. Klasse E bekannt, die mit nur einem einzigen Schalter auskommen und einen hohen Wirkungsgrad haben. Derartige Verstärker werden vorwiegend als Sendeverstärker genutzt und werden mittels eines extern erzeugten Taktes bei einer Einschaltzeit betrieben, die etwa die Hälfte der Periodendauer beträgt. Bei einem derartigen Hochfrequenzverstärker erfolgt keine Lastregelung, da dieser Verstärker bei fester Frequenz und etwa konstanter Last arbeitet.

Zusammenfassend kann zu den bekannten Wechselrichtern festgestellt werden, daß die eingangs beschriebenen Wechselrichter in Form von Halbbrückenschaltungen wegen des Erfordernisses von Transistorschalterpaaren sich für eine sog. Ein-Chip-Lösung beispielsweise mit einem einzigen vertikalen DMOS-Transistor nicht eignen, keine Lastregelung zulassen, einen hohen Bauelementeaufwand erfordern und hohe Leistungsverluste zeigen. Ferner arbeiten derartige Schaltungen nur bei relativ niedrigen Frequenzen, so daß relativ große kapazitive und induktive Bauelemente erforderlich sind.

Der beschriebene Verstärker der Klasse E hat eine feste Frequenzvorgabe in einem engen Frequenztoleranzbereich, wobei der Takt mit einem Verhältnis der Einschaltzeit zur Periodendauer von 0,5 extern erzeugt wird, damit der Verstärker optimal arbeiten kann.

Aus der Fig. 1 der US-A 4,413,313 ist ein resonanter Wechselrichter bekannt, der einen Schwingkreis, eine Quelle, eine elektronische Schaltereinrichtung und eine Ansteuerschaltung aufweist, wobei die Ansteuerschaltung folgende Merkmale aufweist: eine Spannungserfassungsschaltung, die auf einen Spannungswert des Spannungsabfalls über die elektronische Schaltereinrichtung anspricht, eine Stromerfassungsschaltung, die anspricht, wenn der durch die Schaltereinrichtung fließende Strom einen bestimmten Wert übersteigt, und eine der Spannungserfassungsschaltung und der Stromerfassungsschaltung nachgeschaltete Steuersignalerzeugungsschaltung, die ein Ansteuerungssignal für die elektronische Schaltereinrichtung erzeugt. Die Stromerfassungsschaltung erzeugt ausgangsseitig ein "hohes" Signal, sobald ein Strom durch den Widerstand in Richtung zum zweiten Anschluß des Wechselrichters fließt. Der Schwellenwert dieser als Komparatorschaltung ausgeführten Schaltung ist auf Null eingestellt. Der Schwellenwert V_{TH} der Spannungserfassungsschaltung ist auf einen positiven Wert eingestellt. Die beiden Ausgangssignale dieser Erfassungsschaltung werden durch ein UND-Gatter miteinander verknüpft. Dies bedeutet, daß der Schalter nur dann in seinen eingeschalteten Zustand gebracht wird, wenn sowohl der Strom, der durch den Widerstand fließt, einen Wert größer Null hat, als auch der Spannungsabfall über den Schalter einen Wert erreicht, der grösser als V_{Th} ist. Wenn entweder die Stromerfassungsschaltung oder die Spannungserfassungsschaltung oder die beide Erfassungsschaltungen nicht ansprechen, bleibt der Schalter geöffnet. Diese Schrift offenbart also die Verwendung eines strombegrenzenden Schalters, also eines Schalters, der in seinem eingeschalteten Zustand eine nicht-lineare Kennlinie zeigt, da anderenfalls die Spannung über diesen Schalter nicht definiert ansteigen kann.

Die US-A-5,179,511 zeigt eine Wechselrichterschaltung der Klasse E, die mit einem einzigen Schalter arbeitet und eine Stromerfassungsschaltung hat, die den Nulldurchgang des Stromes erfaßt und aufgrund des erfaßten Nulldurchganges und einer festen Zeitverzögerung, die durch ein Zeitverzögerungsglied vorgegeben ist, den einzigen Schalter ansteuert.

Ausgehend von dem oben beschriebenen Stand der Technik liegt der vorliegenden Erfindung daher die Aufgabe zugrunde, einen resonanten Wechselrichter der eingangs genannten Art anzugeben, der trotz einfacher Schaltungsstruktur bei hohen Frequenzen betrieben werden kann.

Diese Aufgabe wird durch einen resonanten Wechselrichter gemäß Patentanspruch 1 gelöst.

Erfindungsgemäß umfaßt die Ansteuerschaltung des resonanten Wechselrichters einerseits eine Spannungserfassungsschaltung, die auf den Nulldurchgang des Spannungsabfalls über der elektrischen Schaltereinrichtung nahe des Nulldurchganges anspricht, und eine Stromerfassungsschaltung, die anspricht, wenn der durch die elektrische Schaltereinrichtung bzw. durch den Schwingkreis fließende Strom einen bestimmten Wert übersteigt, sowie eine dieser Spannungserfassungsschaltung sowie dieser Stromerfassungsschaltung nachgeschaltete Steuersignalerzeugungsschaltung, die bei Ansprechen der Spannungserfassungsschaltung die elektrische Schaltereinrichtung in einem ersten Schaltzustand und bei Ansprechen der Stromerfassungsschaltung diese in einen zweiten Schaltzustand bringt.

Der erfindungsgemäße resonante Wechselrichter hat eine Schaltungsstruktur, die der Schaltungsstruktur eines Verstärkers der Klasse E ähnelt. Jedoch erzwingt die erfindungsgemäße Ansteuerschaltung eine Betriebsweise, bei der der Strom innerhalb der Schaltereinrichtung bzw. des Schwingkreises während der Einschaltzeit nur ansteigend verläuft. Bei einer typischen Betriebsweise des erfindungsgemäßen resonanten Wechselrichters beträgt das Verhältnis der Einschaltzeit zu der Periodendauer etwa 0,25 bis 0,3.

Durch die erfindungsgemäße Ausführung der Ansteuerschaltung des resonanten Wechselrichters vereinfacht sich der Aufwand für die gesamte Wechselrichterschaltung erheblich. Ferner wird verhindert, daß die elektronische Schaltereinrichtung in einen starken Reversbetrieb kommt, so daß der erfindungsgemäße resonante Wechselrichter insbesondere bei Verwendung eines MOS-Transistors als elektronische Schaltereinrichtung extrem verlustarm arbeitet.

Der erfindungsgemäße Wechselrichter bewirkt eine Lastregelung. Die elektronische Schaltereinrichtung des erfindungsgemäßen resonanten Wechselrichters wird eingeschaltet, wenn die Spannung über der elektronischen Schaltereinrichtung nahezu Null geworden ist, und wird ausgeschaltet, wenn der Strom durch die elektronische Schaltereinrichtung bzw. durch den Schwingkreis einen vorgegebenen maximalen Wert erreicht hat. Dieses Maximum wird umso früher erreicht, je größer die Last ist, wodurch mit ansteigender Last die Einschaltbreite und die Frequenz verringert werden und die Spannung an der Last nachgeregelt wird.

Damit bewirkt der erfindungsgemäße resonante Wechselrichter trotz einfacher Schaltungsstruktur innerhalb gewisser Grenzen ein verlustarmes Treiben veränderlicher Lasten bei hohen Frequenzen.

Der erfindungsgemäße resonante Wechselrichter läßt sich als Ein-Chip-Lösung z.B. in einer sog. Smart-Power-Technologie realisieren. Unter Verwendung von Hochvoltschaltern als elektronische Schaltereinrichtung ist der Betrieb an gleichgerichteter Netzspannung möglich. Die benötigte Ansteuerschaltung arbeitet insbesondere bei Verwendung eines MOS-Transistors sehr verlustarm. In diesem Fall lassen sich hohe Schaltgeschwindigkeiten erzielen. Wegen der sich ergebenden hohen Frequenz kann der erfindungsgemäße resonante Wechselrichter mit kleinen kapazitiven und induktiven Bauelementen auskommen.

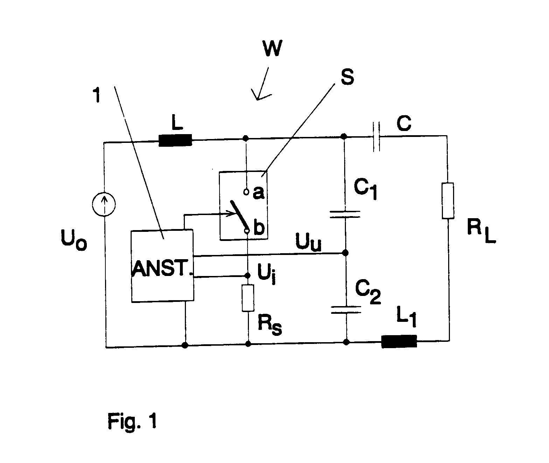

Der in Anspruch 1 definierte und nachfolgend unter Bezugnahme auf die Fig. 1 bis 3 beispielshaft zu erläuternde resonante Wechselrichter verwendet nach einem ersten Aspekt der Erfindung mindestens eine feste Referenzspannung, die zum Abschalten der Schaltereinrichtung oder zu deren Einschalten bei bestimmten Werten von Strom und Spannung durch bzw. über dem Schalter erforderlich ist. Wie nachfolgend weiter verdeutlicht werden wird, ist es ein Ziel der Erfindung, den als sogenannte Klasse-E-Konverter ausgeführten Wechselrichter nach der Erfindung in einem möglichst verlustarmen Zustand zu halten. Dieses Ziel soll auch dann erreicht werden, wenn sich die Eingangsspannung oder die Last ändern.

Um den Konverter beispielsweise bezüglich der Ausgangslast oder Ausgangsspannung zu regeln, kann man ihn nach gewissen Kriterien dimensionieren, ohne die Frequenz oder die Einschaltzeit ändern zu müssen. Hierzu gibt es bereits mathematische Anregungen (vergleiche G.H. Smith/R.E. Zulinski: "A precise Analysis of a high efficiency self-regulated Class E Power Inverter/Converter", Midwest Symposium on Circuits and Systems 1988, Proc. 31, Seiten 219 bis 222).

Eine denkbare Methode der Regelung ist es weiterhin, die Spannung an der Last abzugreifen und deren Änderung durch Frequenzstellung des Verstärkers entgegenzuwirken. (Vergleiche R. Redl/B. Molnar: "Design of a 1,5MHz regulated DC/DC Power Converter", International PCI Conference on Power Conversion 1983, Proc. Seiten 74 bis 78).

Weiterhin ist es gleichfalls denkbar, die Eingangsspannung abzugreifen, um daraus eine Frequenzänderung zur Regelung des Verstärkers bezüglich gleicher Ausgangsleistung oder Ausgangsspannung zu erreichen.

Derartige denkbare Verfahren zur Regelung oder Arbeitspunkteinstellung von Klasse-E-Verstärkern haben den Nachteil, daß entweder eine relativ genaue Frequenz oder Einschaltzeit eingestellt werden muß, oder daß man sehr genaue Referenzspannungen benötigt, um eine bestimmte Schaltfrequenz bzw. einen verlustarmen Zustand zu treffen. Dieses ist einer der Gründe, warum die industrielle Anwendung von Klasse-E-Verstärkern zur Zeit noch von untergeordneter Bedeutung gegenüber klassischen Schaltnetzteil- und Konverter-Lösungen ist. Einer der wesentlichen Aspekte ist hierbei daß die maximale Transistorsperrspannung durch unzulässige Frequenzabweichung überschritten werden kann und ohne zusätzliche Schutzmaßnahmen zur Zerstörung des Transistors führen würde.

Ferner ist es bekannt, daß auf einem Chip integrierte Referenzspannungsquellen und Frequenzgeneratoren eine technologisch bedingte Ungenauigkeit aufweisen, welche nur durch externe Abgleichelemente oder Chipflächen-aufwendige, selbst abgleichende Strukturen verbessert werden kann.

Gemäß einem weiteren Aspekt basiert die Erfindung auf der Zielsetzung, einen resonanten Wechselrichter der eingangs genannten Art zu schaffen, der ohne genau definierte Referenzquellen für Strom und/oder Spannung auskommt.

Diese Zielsetzung der Erfindung wird durch den Gegenstand der Ansprüche 17 und 18 erfüllt.

Die Ansteuerschaltung nach den Ansprüchen 17 und 18 erreicht eine Regelung in der Weise, daß entweder der Stromverlauf durch den Schalter und/oder den Schwingkreis oder der Spannungsverlauf der Spannung über dem Schalter mit Schwellenwerten verglichen wird, um zwei zueinander versetzte Zeitintervalle pro Zyklus des Stromverlaufes bzw. Spannungsverlaufes zu bilden, woraufhin die Ansteuerschaltung aufgrund des Vergleiches der Zeitintervalle miteinander ausgehend von den Zeitintervallen des Stromverlaufs den Wert der von der Spannungserfassungsschaltung verwendeten Spannungsreferenz bzw. ausgehend von den Zeitintervallen des Spannungsverlaufs den Wert der von der Stromerfassungsschaltung verwendeten Stromreferenz ermittelt.

Beim Klasse-E-Konverter mit Null-Spannungs-Schalter kann der Spannungsverlauf über dem Schalter bei der erfindungsgemäß vorgegebenen Betriebsweise besser detektiert werden als der Stromverlauf durch den Schalter. Gleiches gilt für die Null-Strom-Schaltung bezüglich des Stromverlaufs durch den Schalter. Der Grund ist ein in fast allen erforderlichen Betriebszuständen nahezu sinusförmiger Verlauf der Spannung beim Null-Spannungs-Schalter sowie die Rückkehr der Spannung nach Null, was sinngemäß für den Null-Strom-Schalter bezüglich des Stromverlaufs gilt. Deswegen sollte beim Null-Spannungs-Schalter der Spannungsverlauf über dem Schalter durch wenigesten zwei Schwellwerte detektiert und zur Erzeugung zweier aufeinanderfolgender Zeitintervalle verwendet werden, woraus erfindungsgemäß die Referenzspannung für die Stromerfassungsschaltung berechnet wird. Solche Berechnung erfolgt im einfachsten Falle durch die Entscheidung, ob die aktuelle Referenzspannung für die Stromerfassungsschaltung erhöht oder erniedrigt werden soll. Gleichermaßen kann man beispielsweise für sehr schnelle Schaltungen statt Referenzspannungen auch Referenzströme verwenden, wenn Spannungsund Stromerfassungsschaltung statt mit Spannungskomparatoren mit Stromkomparatoren arbeiten.

Die folgenden Ausführungen am Beispiel des Null-SpannungsSchalters gelten sinngemäß für den Null-Strom-Schalter.

Aus den physikalisch-mathematischen Eigenschaften des Klasse-E-Verstärkers ergibt sich, daß die an eine konstante Ausgangslast gelieferte Leistung nahezu konstant bleibt, wenn zeitliche Breite und maximale Amplitude des Spannungsverlaufs über dem Schalter während des ausgeschalteten Zustands etwa konstant bleiben, selbst wenn sich die Eingangsspannung in weiten Grenzen ändert. Solche Änderungen können z.B. einen Stellbereich bis 1 : 4 umfassen. Weiterhin ist der positive Spannungsverlauf des Schalters während seines ausgeschalteten Zustandes zum Amplitudenwert zeitlich nahezu symmetrisch, so daß die Information über einen der beiden zeitlichen Abschnitte vor oder nach Erreichen des Amplitudenwertes zur Kenntnis des gesamten Verlaufes ausreichend ist, wenn man von vernachlässigbaren Abweichungen absieht. Die Erfindung schafft daher eine Schaltung, welche die Referenzspannung für die Stromfrequenz so einstellt, daß der zeitliche Spannungsverlauf über dem Schalter nach Zeitdauer und Amplitude konstant bleibt, indem zwei hintereinanderfolgende Zeitintervalle beispielsweise des von Null aus ansteigenden Spannungsverlaufes über dem Schalter bezüglich des Erreichens des Amplitudenwertes und eines weiteren Zwischenwertes größer als Null miteinander verglichen und in einem festen zeitlichen Verhältnis gehalten werden.

Dieselbe Methode kann Verwendung finden, um eine eingangsspannungsabhänige und somit frequenzabhängige Spannungsüberhöhung an der Ausgangslast zu erzeugen. Dazu muß die Ausgangslast ohmisch-kapazitiv oder induktiv-kapazitiv oder ohmisch-induktiv-kapazitiv ausgelegt werden. Im einfachen Falle einer ohmisch-kapazitiven Last wird durch die eingangsspannungsabhängige Frequenzänderung des geregelten Verstärkers der Resonanzpunkt zwischen der Schwingkreisinduktivität des Verstärkers und der kapazitiven Lastkomponente mehr oder weniger getroffen, so daß die Spannungsüberhöhung größer oder kleiner wird. Dieser Effekt läßt sich beispielsweise zum Zünden von Entladungsröhren oder zur Erzeugung von Zündfunken ausnutzen. Bei Verwendung eines Parallelresonanzkreises als Ausgangs last kann man den gleichen Effekt zur Stromüberhöhung in diesem Kreis nutzen, beispielsweise zur Erzeugung starker Magnetfelder.

Die oben beschriebene erfindungsgemäße Regelung des Klasse-E-Verstärkers als Zeitintervall-Vergleichs-Regelung kann somit vorwiegend als gleichspannungsgesteuerte Wechselspannungsquelle im Falle einer hochohmigen Last oder Konstantleistungsquelle im Falle einer niederohmigen Last Verwendung finden.

Von Vorteil ist dabei zusätzlich, daß die Referenzspannung für die Stromerfassungsschaltung eine berechnete Funktion wenigstens zweier aufeinanderfolgender Zeitintervalle des Spannungsverlaufes über dem Schalter ist, ohne daß hierfür genaue Referenzspannungen zur Einstellung eines Arbeitspunktes des Verstärkers erforderlich sind. Die Erzeugung der Stromfrequenz erfolgt vorzugsweise durch einen Regler mit integrierendem Verhalten, um eine Stabilität des Regelkreises zu gewährleisten.

Genaue Referenzspannungen sind deshalb nicht erforderlich, da sich der Vergleich zweier aufeinanderfolgender Zeitintervalle schaltungstechnisch auf einem Chip gut beherrschen läßt, z.B. durch das Matching von Chipsstrukturen wie Spannungs- und Stromquellen, Widerständen und Kapazitäten, unabhängig von ihrem Absolutwert.

Das Abgreifen von wenigstens drei Zeitpunkten des Spannungsverlaufes wird vorzugsweise dadurch durchgeführt, daß der zeitliche Beginn des Spannungsanstiegs über dem Schalter unmittelbar beim Abschalten des Schalters liegt, so daß durch das Ausschaltsignal ein erster Zeitpunkt vorgegeben ist.

Die Spannung über dem Schalter wird vorzugsweise durch einen kapazitiven Spannungsteiler abgegriffen, welcher zusätzlich bezüglich seines gleichspannungsmäßig hochohmigen Abgriffs auf einen definierten Spannungsbereich gegenüber der Schaltermasse, oder wenigstens gegenüber einem der beiden Schalteranschlüsse geklemmt wird. Unter Schaltermasse wird hier der Schalteranschluß verstanden, welcher mit dem negativen Potential der Eingangsgleichspannungsquelle des Konverters verbunden ist oder diesem Potential gegenüber dem anderen Schalteranschluß am nächsten liegt. Solche Klemmung erfolgt vorzugsweise durch zwei antiparallel geschaltete elektrische Ventile mit definierten Fluß- bzw. Durchbruchspannungen größer als Null, oder durch ein elektrisches Ventil mit definerter Fluß- und Durchbruchspannung in beiden Richtungen (z.B. Zenerdiode).

In Reihe zu der beschriebenen Potential-Klemmschaltung wird vorzugsweise ein Stromsensor beispielsweise in Form eines kleinen ohmschen Widerstandes geschaltet welcher den Gesamtstrom durch die Klemmschaltung detektiert. Zur weiteren Verarbeitung der so gewonnenen Signale aus der Spannungserfassungsschaltung reicht es aus, daß lediglich festgestellt wird, ob ein Strom durch die Klemmschaltung fließt oder nicht. Optional wird noch die Stromrichtung festgestellt. Der Strom über die Klemmschaltung (elektrische Ventile) beginnt zu fließen, wenn die über dem Schalter ansteigende Spannung untersetzt durch das Teilverhältnis des kapazitiven Spannungsteilers die Durchbruch- oder Flußspannung des jeweiligen Ventils erreicht hat. Dieser Strom fließt solange durch die Klemmschaltung, bis die Spannung über dem Schalter nicht weiter ansteigt, bzw. wieder absinkt. Bei einem ohmschen Spannungsteiler der Spannungserfassungsschaltung gilt, daß sich der Zeitpunkt des Spannungsmaximums nicht direkt erfassen läßt, sondern nur ein zu diesem Zeitpunkt symmetrisches Intervall, was in den folgenden Ausführungen nicht weiter betrachtet werden soll. Dieser Zeitpunkt der Beendigung des Stromflusses durch die Klemmschaltung ist beim kapazitiven Teiler betriebsbedingt etwa identisch mit dem Zeitpunkt der maximalen Amplitude der Schalterspannung (Spitzenwert). Damit hat man bereits drei Zeitpunkte erfaßt, wobei im wesentlichen nur der mittlere Zeitpunkt von der Fluß- oder Durchbruchspannung eines der Ventile sowie von der Größe der Teilerkapazität abhängt. Der kapazitive Spannungsteiler ist ein gegenüber der Ansteuerschaltung externes Bauteil, das mit Genauigkeiten bis zu 1% auf einfache Weise realisierbar ist. Die Genauigkeit von Fluß- bzw. Durchbruchspannungen elektrischer Ventile wie Halbleiterdioden ist physikalisch bedingt meistens auf weniger als 5% einstellbar, auch dann, wenn diese Dioden auf einem Chip integriert werden.

Zusätzlich kann man sich noch das Matching der antiparallel geschalteten Dioden zunutze machen, indem man die Zeitintervalle positiver als auch negativer Stromrichtung durch die Dioden vergleicht, und aus deren gewichteter Differenz eine Korrektur des Zeitpunktes, zu dem die Fluß- bzw. Durchbruchspannung über dem jeweiligen Ventil erreicht wird, vornimmt, so daß die technologische Schwankung des Absolutwertes der Fluß- bzw. Durchbruchspannung eliminiert wird.

Alle diese Maßnahmen ermöglichen es, hohe Genauigkeitsanforderungen an die Spannungsreferenzen der Signalerzeugungsschaltung zu vermeiden und sie durch physikalische Eigenschaften des Klasse-E-Verstärkers, die hauptsächlich nur durch die passiven Elemente des Verstärkers bedingt sind, sowie vorzugsweise wenigstens ein oder zwei KlemmElemente der Spannungserfassungsschaltung zu ersetzen.

Eine bevorzugte Ausführungsform des erfindungsgemäßen resonanten Wechselrichters wird nachfolgend unter Bezugnahme auf die beiliegenden Zeichnungen näher erläutert. Es zeigen:
- Fig. 1: ein Schaltungsdiagramm einer ersten Ausführungsform des erfindungsgemäßen resonanten Wechselrichters;
- Fig. 2: eine Ausführungsform der Ansteuerschaltung des in Fig. 1 gezeigten Wechselrichters;
- Fig. 3: ein Schaltungsdiagramm einer zweiten Ausführungsform des erfindungsgemäßen resonanten Wechselrichters, und
- Fig. 4: eine dritte Ausführungsform der Ansteuerschaltung des resonanten Wechselrichters;
- Fig. 5: eine abgewandelte Ausführungsform des resonanten Wechselrichters;
- Fig. 6: eine dritte Ausführungsform der Ansteuerschaltung;
- Fig. 7: eine vierte Ausführungsform der Ansteuerschaltung; und
- Fig. 8: eine fünfte Ausführungsform der Ansteuerschaltung.

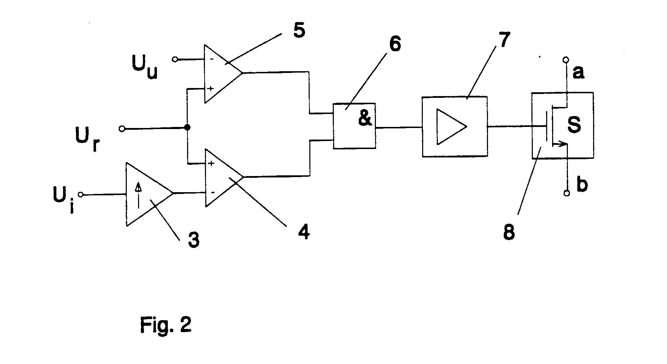

Die in Fig. 1 gezeigte erste Ausführungsform eines erfindungsgemäßen resonanten Wechselrichters, der in seiner Gesamtheit mit dem Bezugszeichen W bezeichnet ist, umfaßt einen Serienresonanzkreis, dessen Resonanzfrequenz im wesentlichen durch die Kapazität eines Schwingkreiskondensators C₁ und den Induktivitätswert einer Schwingkreisinduktivität L₁ festgelegt ist. Die Schwingkreisinduktivität liegt in Reihe zu einer Last R_{L} sowie zu einem Gleichstromsperrkondensator C, dessen Kapazitätswert größer als derjenige des Schwingkreiskondensators C₁ ist, und daher die Resonanzfrequenz des so gebildeten Serienschwingkreises C, C₁, L₁ nur unwesentlich beeinflußt. Der Wechselrichter umfaßt ferner eine Spannungsquelle U₀ mit einer in Reihe zu dieser geschalteten Drossel L. Der Induktivitätswert der Drossel L ist größer als derjenige der Schwingkreisinduktivität L₁. Parallel zu dem Serienschwingkreis C, C₁, L₁ und der Last R_{L} liegt einerseits ein kapazitiver Spannungsteiler, der durch den Schwingkreiskondensator C₁ und einen weiteren Spannungsteilerkondensator C₂ gebildet ist, sowie andererseits die Reihenschaltung eines elektronischen Schalters S und eines Serienwiderstandes R_{S}. Wie insbesondere durch Fig. 2 verdeutlicht wird, wird bei dem gezeigten bevorzugten Ausführungsbeispiel der elektronische Schalter S durch einen MOS-Transistor 8 gebildet.

Einer Ansteuerschaltung 1, deren Ausgangssignal den elektronischen Schalter S betätigt bzw. dem Gateanschluß des MOS-Transistors zugeführt wird, werden eingangsseitig zwei Spannungssignale zugeführt. Hierbei handelt es sich einerseits um das Spannungssignal Uᵤ am Spannungsteilerknoten und andererseits um das Spannungssignal Uᵢ am gemeinsamen Knoten des elektronischen Schalters S und des Serienwiderstandes R_{S}.

Allgemein umfaßt die Ansteuerschaltung eine Spannungserfassungsschaltung, die auf einen Spannungswert des Spannungsabfalls Uᵤ über die elektronische Schaltereinrichtung S nahe des Nulldurchganges des Spannungsabfalles anspricht, sowie eine Stromerfassungsschaltung, die anspricht, wenn der durch die Schaltereinrichtung S oder der durch den Schwingkreis fließende Strom einen bestimmten Wert übersteigt. Die Stromerfassungsschaltung kann bei dem bevorzugten Ausführungsbeispiel auf den Spannungsabfall Uᵢ über den Serienwiderstand R_{S} ansprechen. Gleichfalls ist es möglich, die Schwingkreisinduktivität L₁ mit einem Abgriff bzw. einer Anzapfung zu versehen, um hier den Strom über eine induzierte Spannung indirekt zu messen.

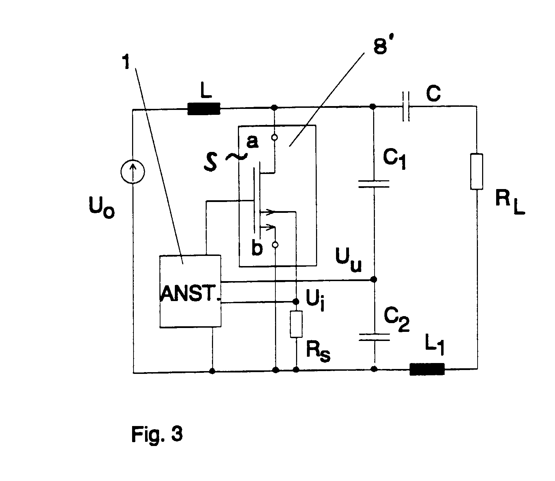

Alternativ kann anstelle eines MOS-Transistors 8 (vergleiche Fig. 2) ein sog. Multi-Source-Transistor 8' (vergleiche Fig. 3) verwendet werden, um das den Strom anzeigende Signal Uᵢ zu gewinnen. Bei Verwendung eines derartigen Multi-Source-Transistors 9 wird eine Source-Elektrode dieses Transistors 9 direkt mit dem Bezugspotentialpunkt verbunden, während die andere Elektrode über den Serienwiderstand R_{S} zum Erzeugen des Spannungsabfalles Uᵢ mit dem Bezugspotential verbunden wird. Ansonsten stimmt dieses Ausführungsbeispiel gemäß Figur 3 mit demjenigen gemäß Figur 1 überein.

Bei dem gezeigten Ausführungsbeispiel ist die Spannungsteilerschaltung durch einen kapazitiven Spannungsteiler C₁, C₂ gebildet.

Ebenfalls kann, obwohl dies als weniger bevorzugt angesehen wird, ein ohmischer Spannungsteiler verwendet werden. In diesem Fall entfällt der Spannungsteilerkondensator C₂.

Die Ansteuerschaltung umfaßt in jedem Fall eine Steuersignalerzeugungsschaltung 6, 7 zur Erzeugung des Ansteuersignales für die elektronische Schaltereinrichtung S, die bei Ansprechen der Spannungserfassungsschaltung die elektronische Schaltereinrichtung S in einen ersten Schaltzustand bringt und bei Ansprechen der Stromerfassungsschaltung diese in einen zweiten Schaltzustand bringt. Der erste Schaltzustand ist vorzugsweise der Durchschaltzustand oder Einschaltzustand, während der zweite Schaltzustand vorzugsweise der geöffnete Zustand ist.

Bei dem bevorzugten Ausführungsbeispiel gemäß Fig. 2 umfaßt die Ansteuerschaltung seitens der Stromerfassungsschaltung einen ersten Komparator 4, der mit seinem nicht invertierenden Eingang mit einem Bezugspotential Uᵣ beaufschlagt wird und an seinem invertierenden Eingang mit dem Ausgang einer Pegelschieberschaltung 3 verbunden ist, die eingangsseitig mit dem gemeinsamen Knoten der Schaltereinrichtung und des Serienwiderstandes R_{S} verbunden ist. Diese Pegelschieberschaltung kann beispielsweise ein dem ersten Komparator 4 vorgeschalteter Verstärker sein, welcher zur Anpassung der Bezugsspannung erforderlich sein mag.

Die Spannungserfassungsschaltung wird bei dem hier gezeigten Ausführungsbeispiel durch einen zweiten Komparator 5 gebildet, dessen nicht invertierender Eingang gleichfalls von dem Bezugspotential Uᵣ beaufschlagt wird, während der invertierende Eingang mit dem gemeinsamen Knoten der Spannungsteilerkondensatoren C₁, C₂ verbunden ist.

Die beiden Komparatoren 4, 5 sind ausgangsseitig mit den Eingängen eines UND-Gatters 6 verbunden, welches eine Treiberschaltung 7 ansteuert, die zusammen mit dem UND-Gatter 6 die Steuersignalerzeugungsschaltung bildet. Ausgangsseitig ist die Treiberschaltung 7 mit dem Gateanschluß des MOS-Transistors 8 verbunden.

Bei den gezeigten Ausführungsbeispielen ist der Schwingkreis als Serienschwingkreis ausgeführt. Als weniger bevorzugt kommt auch ein Parallelschwingkreis in Betracht.

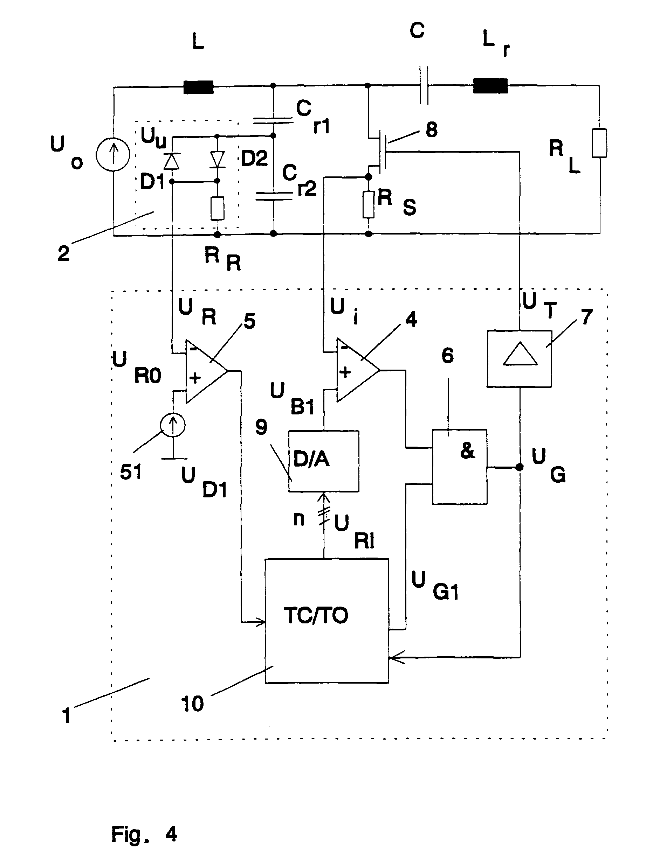

Die nachfolgend zu erläuternden Ausführungsformen des erfindungsgemäßen resonanten Wechselrichters nach den Fig. 4 bis 7 stimmen miteinander und mit den Ausführungsformen nach den Fig. 1 bis 3 mit Ausnahme der nachfolgend erläuterten Unterschiede überein. Zum Vermeiden von Wiederholungen werden übereinstimmende Teile mit gleichen Bezugszeichen bezeichnet, so daß deren nochmalige Erläuterung entbehrlich ist.

Fig. 4 zeigt eine weitere Ausführungsform der Ansteuerschaltung 1. Der Spannungsabfall U_{U} wird über die beiden Dioden D1 und D2 zwischen den Potentialen ihrer Flußspannungen gegenüber Masse M festgehalten, ist jedoch in diesem Intervall variabel. Über den Serienwiderstand R_{R} wird das Signal der Spannungserfassungsschaltung U_{R} abgegriffen, welches als Eingangssignal für den Spannungskomparator 5 dient. Die Referenzspannung U_{RO} ist dabei eine kleine Spannung größer als Null ohne einen exakt definierten Wert. Dieser Wert hängt von den Eigenschaften des Komparators 5, wie zum Beispiel der Ansprechschwelle (Offset), den dynamischen Eigenschaften sowie der Stabilisierung dieser Referenzspannung ab. Sie kann aber beispielsweise um 100% schwanken, ohne daß sich das detektierte Zeitintervall wesentlich ändern wird, d.h. es werden Änderungen von weniger als 1% erzielbar sein. Dies ist dadurch bedingt, daß die Ansprechschwelle des Komparators 5 in einem sehr kurzen Zeitintervall, also fast mit einem Rechteckimpuls überschritten wird. Der reale Impuls hat etwa die Form einer Sinushalbwelle, bei der aber der Anstieg im Nulldurchgang wesentlich größer als bei einer Sinusfunktion ist. Die Komparatorausgangsspannung U_{D1} dient zusammen mit der Schalter-Steuerspannung U_{G} (hier für einen MOS-Transistor) als Berechnungsgröße für die digitale Einstellung der Stromreferenz U_{RI}, welche im Beispiel als analoges Signal über einen DA-Wandler 9 an den Stromkomparator 4 als variable Referenzspannung U_{Bl} weitergegeben wird. Allgemein erfolgt diese Weitergabe durch einen Regler, der vorzugsweise ein Integrator ist, damit eine stabile Regelung gewährleistet wird. Gleichzeitig wird der Zeitpunkt des Wiedereinschaltens über die Zeitintervall-Vergleichsschaltung 10 in Form des Signals U_{G1} erzeugt, und über eine Verknüpfung 6 zusammen mit dem Ausgang des Stromkomparators 4 zur Ansteuerung des Transistors 8 über den Treiber 7 genutzt.

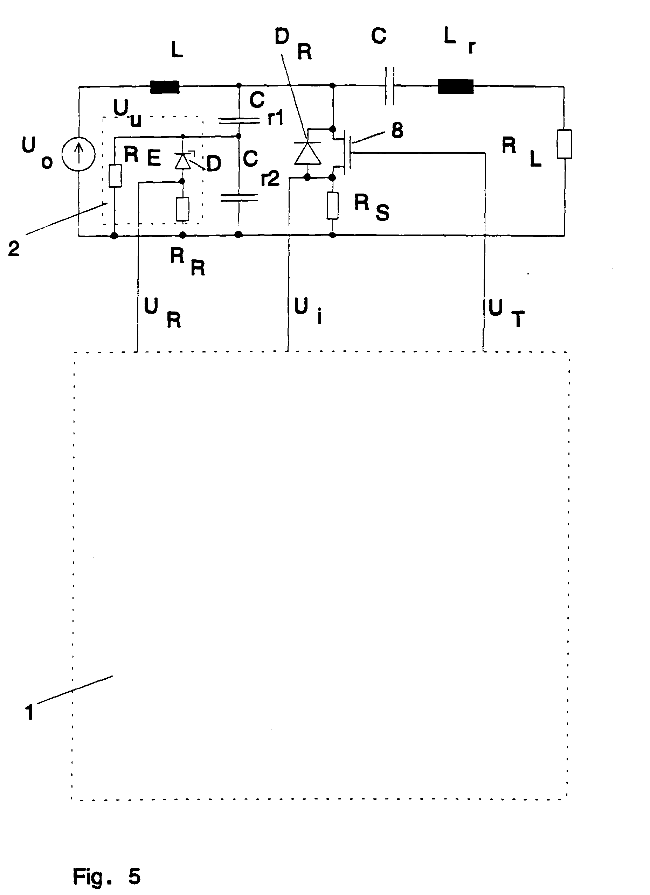

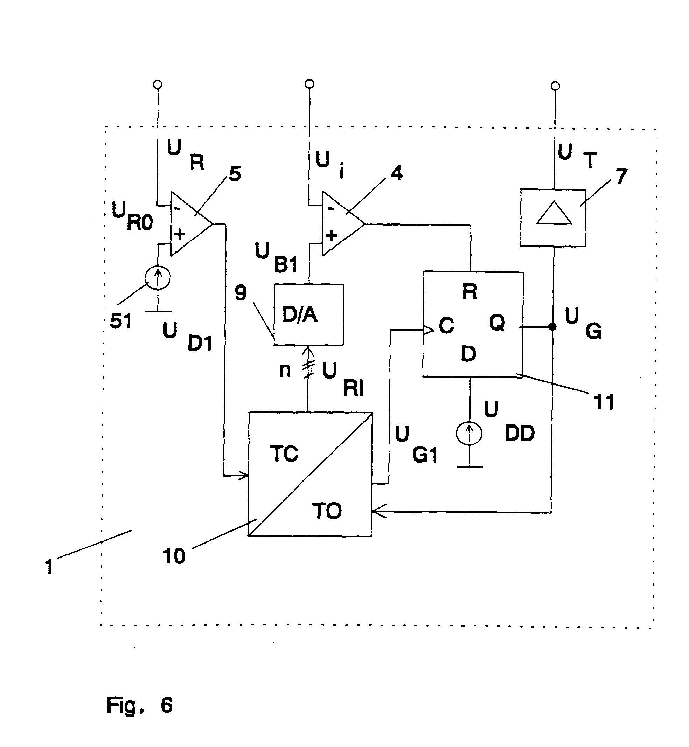

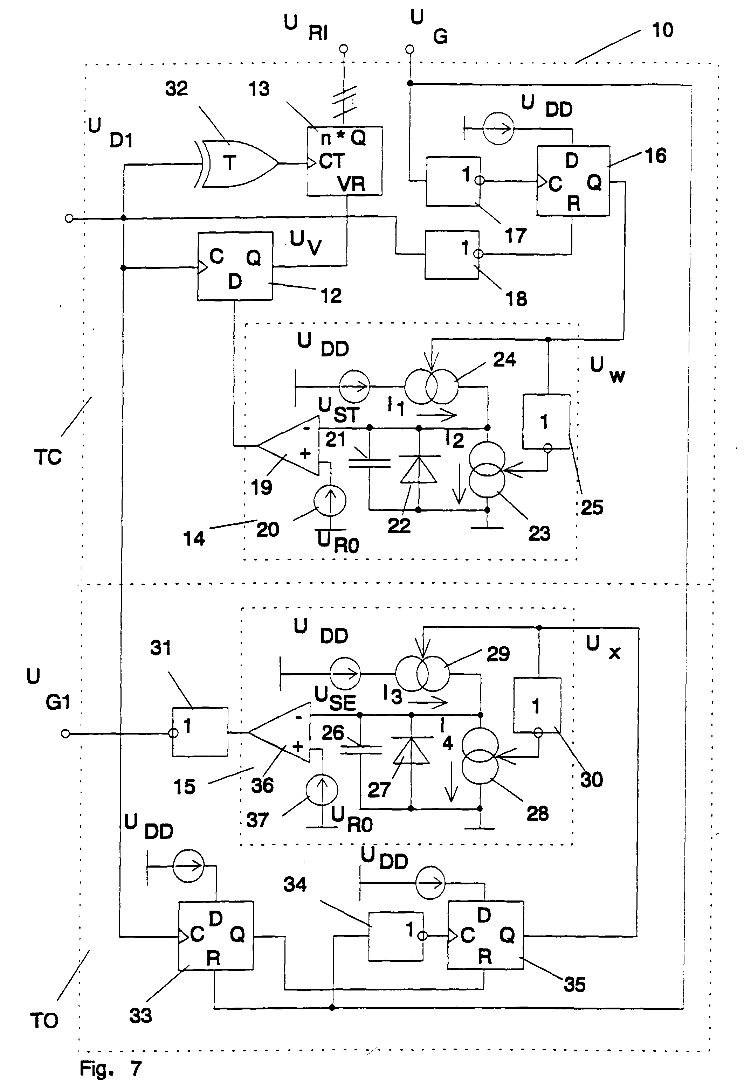

Fig. 5 zeigt eine Variante der Auskopplungsschaltung 2 für die Spannungserfassungsschaltung mit nur einer Diode D. Die Diode weist in einer Richtung eine Flußspannung und in die andere Richtung eine Durchbruchspannung auf. Außerdem ist ein hochohmiger Entladewiderstand R_{E} vom Abgriff U_{U} gegen Masse M geschaltet, um ein Floaten des Potentials, z.B. in einem definierten Startzustand zu vermeiden. Die zu dem Transistor 8 antiparallel gelegene Diode D_{R} gewährleistet, daß der Transistor jederzeit in einen Reversbetrieb gelangen kann. In Fig. 6 ist ein modifizierter Aufbau der Ansteuerschaltung 1 mit einem Flip-Flop 11 zur Erzeugung des Signals U_{G} zu sehen. Weiterhin ist die Schaltung für den Zeitintervallvergleich 10 in zwei Schaltungsteile TC und TO aufgeteilt. Fig. 7 zeigt nun eine bevorzugte Variante der Schaltung 10, bei der in der Teilschaltung TC der Zeitintervallvergleich für die Regelung auf konstante Leistung vorgenommen wird. Dabei wird bei jeder periodischen Schwingung des Verstärkers das Signal U_{D1} aus der Spannungserfassungsschaltung genutzt, um mit der positiven Flanke ein D-Flip-Flop 12 zu takten. Dieses Flip-Flop gibt ein berechnetes Signal Uᵥ zum Zeitpunkt des Spannungsmaximums am Schalter (Zurückschalten des Spannungskomparators) an einen VR-Zähler 13 weiter, wodurch das digitale Signal U_{RI} entweder erhöht oder erniedrigt wird. Die Berechnung des Regel-Vergleichssignals Uᵥ erfolgt durch eine Zeitintervall-Vergleichsschaltung 14, die durch ein Signal U_{w} angesteuert wird. Dieses Signal U_{w} entsteht am Ausgang eines Flip-Flops 16, welches durch das negierte Signal U_{G} gesetzt, und durch das Signal U_{D1} zurückgesetzt wird. Wenn der Schalter ausschaltet, wird somit der Ausgang des Flip-Flops 16 gesetzt, was den zeitlichen Beginn des Spannungsanstieges am Schalter markiert. Durch das Signal U_{w} wird die Stromquelle 24(I1) eingeschaltet, und die Stromquelle 23(I2) über die Negation 25 ausgeschaltet. Die Stromquelle 23 wird bis zu diesem Zeitpunkt über eine möglichst ideale Diode 22 kurzgeschlossen, so daß die Spannung am invertierenden Eingang des Komparators 19 nicht negativ werden kann, sondern etwa den Wert Null hat. Von diesem Null-Wert steigt nunmehr die Spannung am invertierenden Eingang linear an, da die Kapazität 21 über die konstante Stromquelle 24 aufgeladen wird. Sobald das Signal U_{w} zurücksetzt, d.h., wenn der Spannungskomparator nach Erreichen der Fluß- oder Durchbruchspannung eines Ventils der Spannungserfassungsschaltung 2 zurückschaltet, wird das Flip-Flop 16 zurückgesetzt und schaltet die beiden Stromquellen 23 und 24 wieder in den Ausgangszustand. Nun wird die Kapazität 21 durch die Stromquelle 23 so lange linear entladen, bis sie wieder ihren Ausgangsspannungswert erreicht hat. Bei diesem Vorgang schaltet der Vergleichskomparator 19 zunächst bei Ansteigen des Signals am invertierenden Eingang zurück, sobald die Referenzspannung 20(U_{RO}) erreicht ist. Diese Spannung ist eine kleine Referenzspannung größer als Null ohne einen fest definierten Wert. Das Zeitintervall vom Einschalten der Stromreferenz 24 bis zu deren Abschalten wird nun im Verhältnis der Ströme I1 zu I2 verlängert, wonach der Komparator 19 wieder einschaltet. Dadurch entsteht zum Zeitpunkt des Wiedereinschaltens von U_{D1} ein Signal Uᵥ, welches auswertet, ob der Klasse-E-Verstärker seine Soll-Einschaltzeit und damit die Soll-Frequenz erreicht hat. Im Falle einer vollständigen Ausregelung wäre somit das Signal Uᵥ zum Zeitpunkt des Durchstellens über das Flip-Flop 12 gerade auf 50% zwischen den beiden digitalen Zuständen. Dieser metastabile Zustand wird in der Praxis selten erreicht, weil die Schaltzeiten sehr klein sind. Der VR-Zähler kann zusätzlich mit einem ternären Eingang versehen werden, um einen dritten Zustand zu erfassen, bei dem keine nennenswerten Regelabweichung vorhanden ist. Ein solch großer Aufwand wird aber eingespart, wenn man das Latch 12 mit einer zusätzlichen Schaltung zur Unterdrückung oder ausreichenden Herabsetzung der Wahrscheinlichkeit einer Metastabilität ausrüstet. Ein Verzögerungsglied 32 kann dafür sorgen, daß dann zunächst ein definierter Zustand am VR-Eingang des Zählers entstanden ist, bevor der Zähler zweckmäßigerweise vom selben Signal U_{D1} getaktet wird.

Damit wird die Gefahr vermieden, daß der Zähler in einen unerwünschten Zustand geht, und dadurch die Spitzenspannung am Schalter weit überschritten wird, nachdem eine nichtzulässige Stromreferenz eingestellt wurde. Eine sichere Methode, dieses zu vermeiden, ist das Kopieren des jeweiligen Zählerstandes in einen zweiten Zähler. Letzterer wird zunächst noch im letzten Zustand gehalten, während der erste weiterzählt. Danach wird die Abweichung zwischen den Zählern verglichen und annuliert, sobald sie größer als ein oder wenigstens k Bit ist, d.h. es wird der gespeicherte letzte Zustand des ersten Zählers in diesen zurückgeschrieben, so daß sich die Stromreferenz in diesem Fall nicht ändert.

Die Schaltung TO besitzt ebenfalls eine Zeitintervall-Vergleichs-Schaltung 15, welche zur Berechnung des Wiedereinschaltzeitpunktes des Schalters dient. Bei Ausschalten des Signals U_{G} wird zunächst über die Negation 34 ein Flip-Flop 35 gesetzt, welches die Stromquellen 28 (I4) und 29 (I3) umschaltet. Das Signal U_{D1} setzt über ein weiteres Flip-Flop 33 das Signal Uₓ durch Rücksetzen des Flip-Flops 35 in den Ausgangszustand, wenn das Spannungsmaximum über dem Schalter erreicht ist. Von diesem Zeitpunkt an wird die Kapazität 26 (C_{G}) wieder entladen, und erreicht nach einem Zeitintervall, welches zum Zeitintervall des umgeschalteten Zustands der beiden Stromquellen 28 und 29 im Verhältnis der Ströme I3 und I4 steht, wieder ihren spannungsmäßigen Ausgangszustand. Das Zeitintervall, in welchem die beiden Stromquellen 28 und 29 umgeschaltet waren, entspricht dem Zeitintervall, in dem die Schalterspannung von Null auf ihren Maximalwert ansteigt. Somit werden die beiden Ströme I3 und I4 etwa im Verhältnis 1 : 1 liegen müssen, um den Schalter über das Signal U_{G1} nach Vergehen der nochmals gleichen Zeit wieder einzuschalten. Dieses Einschaltsignal wird über die Negation 31 durch den Komparator 36 erzeugt, welcher nach der gleichen Weise funktioniert wie der Komparator 19 in Schaltung 14. Somit wird auch hier nur eine wertmäßig nicht fest definierte Referenzspannung 37 benötigt. Ein weiterer Vorteil dieser Schaltung ist ein sicheres Funktionieren auch dann, wenn die Spannung am Schalter z.B. bei dynamischen Übergängen nicht vollständig auf Null zurückkehrt. Dann wird trotzdem der Zeitpunkt des Spannungsminimums getroffen, um den Schalter noch ausreichend verlustarm einzuschalten. Eine solche Möglichkeit gäbe es nicht, wenn man den Absolutwert der Schalterspannung direkt mit einer Referenzspannung nahe Null vergleichen würde. Das Verhältnis der Ströme I3 zu I4 kann auch etwas größer als 1 : 1 sein, wenn der Schalter erst eine gewisse Zeit nach dem Erreichen des Spannungs-Nullwertes eingeschaltet werden muß. Das kann der Fall sein, wenn man den Klasse-E-Verstärker so dimensioniert hat, daß der Transistor beim Einschalten in einen schwachen Reversbetrieb kommt. Dann nämlich wird eine zum Schalter antiparallel geschaltete Diode D_{R}, wie in Figur 2 dargestellt, leitend, und übernimmt den Reversstrom. Betriebsbedingt wird dieser Strom relativ schnell seine Richtung wechseln und danach positiv durch den Schalter fließen, so daß nur ein kleines Zeitintervall als Toleranzbreite für das Wiedereinschalten zur Verfügung steht. Diese Tatsache kommt dem Umstand entgegen, daß es bei der Auslegung einer realen Schaltung immer zu kleinen Abweichungen vom vorgegebenen Wert kommen wird, wodurch eine erhöhte Zuverlässigkeit des verlustarmen Einschaltens gegeben ist.

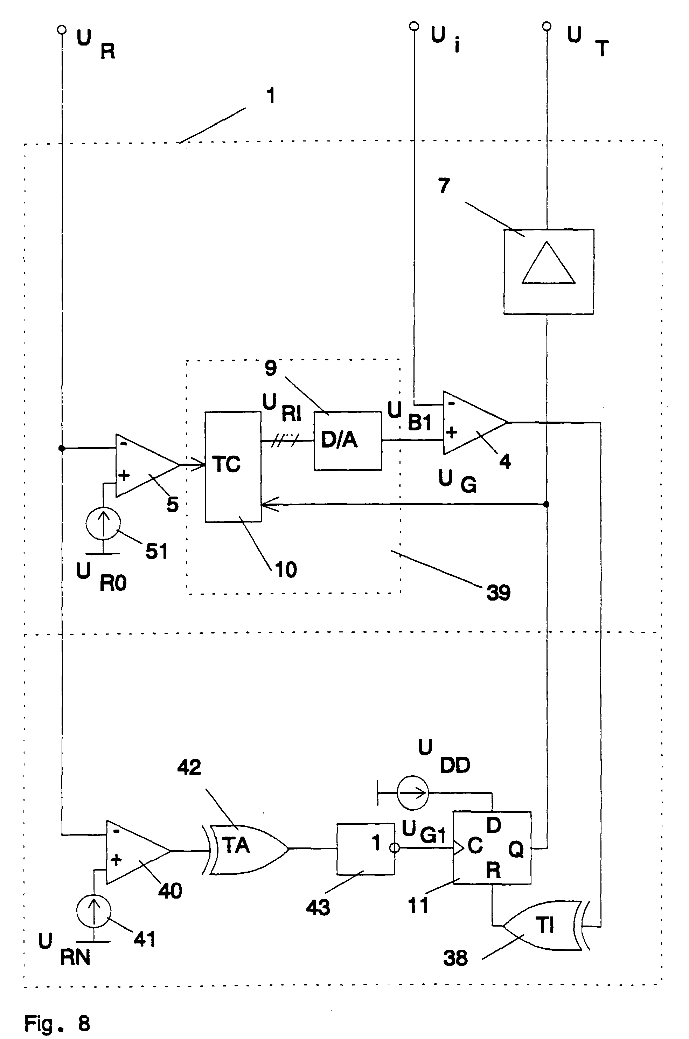

Fig. 8 zeigt eine andere Möglichkeit zur Erzeugung des Einschaltsignals für den Schalter. Das Signal U_{R} aus der Spannungserfassungsschaltung wird in diesem Fall von zwei Komparatoren ausgewertet. Der Komparator 5 erzeugt dabei wie in Fig. 7 das Signal für die Zeitintervall-Vergleichs-Regelung. Vorzugsweise erfolgt die Regelung über einen Integrator 39, der auch in diesem Beispiel als digitale Zeitintervall-Vergleichsschaltung zusammen mit einem nachgeschalteten D/A-Wandler ausgeführt ist. Dagegen wird zur Erzeugung des Einschaltsignals ein zweiter Komparator 40 mit einer kleinen negativen Referenzspannung 41 ohne fest definierten Wert verwendet, welcher den Stromfluß durch die antiparallel geschalteten Ventile der Spannungserfassungsschaltung in negativer Richtung detektiert. Aus mathematischen Gründen wird der Ansprechzeitpunkt des Komparators 40 in einem festen zeitlichen Abstand zum erforderlichen Zeitpunkt des Wiedereinschaltens liegen. Durch eine feste Zeitverzögerung 42 (TA) wird der Einschaltzeitpunkt über die Negation 43 an das Flip-Flop 11 weitergegeben. Das Zeitverzögerungsglied 42 kann bezüglich seines Wertes TA um einen Toleranzwert in Größenordnung der Breite des Zeitraumes, in welchem ein Reversstrom durch den Schalter fließt, streuen.

Weiterhin ist in Fig. 8 ein Zeitverzögerungsglied 38 (TI) gezeigt, welches eine annähernde Linearisierung zwischen der einzustellenden Stromfrequenz U_{RI} und der Einschaltzeit des Schalters ergibt, wodurch der Regelbereich des Verstärkers bezüglich seiner Eingangsspannung nochmals erweitert werden kann. Aus mathematischen Gründen kann der Strom durch den Schalter bei kleiner werdender Eingangspannung zunächst mit einer großen Geschwindigkeit ansteigen, danach aber wesentlich flacher verlaufen, wodurch der maximale Schalterstrom zu größeren Einschaltzeiten hin nur noch wenig größer wird. Um solche starke Nichtlinearität zu umgehen, wird die vorzugsweise konstante Zeitverzögerung TI etwas kleiner als die kleinste Einschaltzeit des Schalters bei maximaler Eingangsspannung gewählt, so daß eine sehr kleine Stromreferenz U_{RI} für diesen Fall eingestellt werden muß. Wird die Eingangsspannung dagegen kleiner werden, so wirkt sich diese Zeitverzögerung nicht mehr so stark gegenüber der Einschaltzeit aus, so daß die zugehörige Stromreferenz etwa linear mit der erforderlichen Einschaltzeit verändert werden muß. Das Verzögerungsglied 38 kann auch dann vorteilhaft sein, wenn der Stromverlauf beispielsweise bei hochohmigen Lasten sein Maximum während der Einschaltzeit überschreitet und wieder abfällt. Dabei kann durch die Zeitverzögerung TI ein Referenzstrom schon vor Erreichen des Strommaximums zum Abschalten des Schalters dienen, wodurch die Funktionsweise des Reglers bei größeren Einschaltzeiten als bei den zuerst beschriebenen Ausführungsformen und bei höherohmiger Last erhalten bleibt.

## Patentansprüche

1. Resonanter Wechselrichter der Klasse E mit einem Schwingkreis (C, C₁, L₁) , einer Quelle (U₀), einer elektronischen Schaltereinrichtung (S) und einer Ansteuerschaltung (1), die folgende Merkmale aufweist:
- eine Spannungserfassungsschaltung (C₁, C₂, 5), die auf einen Spannungswert des Spannungsabfalls über die elektrische Schaltereinrichtung (S) bezogen auf eine Spannungsreferenz anspricht;
- eine Stromerfassungsschaltung (R_{S}, 3, 4), die auf einen Stromwert des durch die Schaltereinrichtung (S) und/oder den Schwingkreis (C, C₁, L₁) fließenden Strom bezogen auf eine Stromreferenz anspricht, und
- eine der Spannungserfassungsschaltung (C₁, C₂, 5) sowie der Stromerfassungsschaltung (R_{S}, 3, 4) nachgeschaltete Steuersignalerzeugungsschaltung (6, 7) zur Erzeugung eines Ansteuersignales für die elektronische Schaltereinrichtung (S),
dadurch gekennzeichnet,
daß die Steuersignalerzeugungsschaltung (6, 7) bei Ansprechen der Spannungserfassungsschaltung (C₁, C₂, 5) die elektronische Schaltereinrichtung (S) in einem ersten Schaltzustand und bei Ansprechen der Stromerfassungsschaltung (R_{S}, 3, 4) diese (S) in einen zweiten Schaltzustand bringt.

2. Resonanter Wechselrichter nach Anspruch 1, dadurch gekennzeichnet,
daß die Quelle eine Spannungquelle (U₀) mit einer in Reihe zu dieser geschalteten Drossel (L) umfaßt,
daß der Schwingkreis ein Serienschwingkreis (C, C₁, L₁) ist, und
daß die Schaltereinrichtung in ihrem ersten Schaltzustand geschlossen und in ihrem zweiten Schaltzustand geöffnet ist.

3. Resonanter Wechselrichter nach Anspruch 1 oder 2, dadurch gekennzeichnet,
daß die Ansteuerschaltung (1) die elektronische Schaltereinrichtung (S) derart ansteuert, daß das Verhältnis (D) der Einschaltzeit zu der Periode kleiner als 0,5 ist.

4. Resonanter Wechselrichter nach Anspruch 3, dadurch gekennzeichnet,
daß die Ansteuerschaltung (1) die elektronische Schaltereinrichtung (S) derart ansteuert, daß das Verhältnis (D) der Einschaltzeit zu der Periode zwischen 0,1 und 0,4 beträgt.

5. Resonanter Wechselrichter nach Anspruch 3, dadurch gekennzeichnet,
daß die Ansteuerschaltung (1) die elektronische Schaltereinrichtung (S) derart ansteuert, daß das Verhältnis (D) der Einschaltzeit zu der Periode zwischen 0,25 und 0,30 beträgt.

6. Resonanter Wechselrichter nach einem der Ansprüche 1 bis 5, dadurch gekennzeichnet,
daß die Stromerfassungsschaltung einen in Reihe zu der Schaltereinrichtung (S) geschalteten Widerstand (R_{S}) und einen den Spannungsabfall über diesen Widerstand (R_{S}) erfassenden ersten Komparator (4) aufweist.

7. Resonanter Wechselrichter nach Anspruch 6, dadurch gekennzeichnet,
daß eine Pegelschieberschaltung (3) zwischen dem gemeinsamen Knoten der Schaltereinrichtung (S) und des Widerstandes (R_{S}) und dem invertierenden Eingang des ersten Komparators (4) geschaltet ist, und
daß der nicht invertierende Eingang des ersten Komparators (4) von einer Bezugsspannung (U_{BL}, Uᵣ) beaufschlagt wird.

8. Resonanter Wechselrichter nach Anspruch 6 oder 7, dadurch gekennzeichnet,
daß die Spannungserfassungsschaltung einen Spannungsteiler (C₁, C₂) parallel zu der Reihenschaltung des Widerstandes (R_{S}) und der Schaltereinrichtung (S) aufweist.

9. Resonanter Wechselrichter nach Anspruch 8, dadurch gekennzeichnet,
daß der Spannungsteiler ein kapazitiver Spannungsteiler (C₁, C₂) ist.

10. Resonanter Wechselrichter nach Anspruch 8, dadurch gekennzeichnet,
daß der Spannungsteiler ein Widerstandsspannungsteiler ist.

11. Resonanter Wechselrichter nach einem der Ansprüche 8 bis 10, dadurch gekennzeichnet,
daß die Spannungserfassungsschaltung ferner einen zweiten Komparator (5) aufweist, dessen invertierender Eingang mit dem Spannungsteilerknoten des Spannungsteilers (C₁, C₂) und dessen nicht invertierender Eingang mit einer Bezugsspannungsquelle ((U_{Ro}, Uᵣ) verbunden ist.

12. Resonanter Wechselrichter nach einem der Ansprüche 1 bis 11, dadurch gekennzeichnet,
daß der Serienschwingkreis (C, C₁, L₁) in Reihe zu einer zu treibenden ohmischen Last (R_{L}) oder in Reihe zu einer ohmisch-kapazitiven Last oder in Reihe zu einer ohmischen-induktiven Last liegt.

13. Resonanter Wechselrichter nach einem der Ansprüche 1 bis 12, dadurch gekennzeichnet,
daß die Schaltereinrichtung einen einzigen Transistorschalter (8) aufweist.

14. Resonanter Wechselrichter nach einem der Ansprüche 1 bis 13, dadurch gekennzeichnet,
daß die Schaltereinrichtung einen Feldeffekt-Transistor (9) mit wenigstens zwei Source-Elektroden aufweist.

15. Resonanter Wechselrichter nach Anspruch 14, dadurch gekennzeichnet,
daß die Stromerfassungsschaltung einen mit einer der Source-Elektroden des Feldeffekt-Transistors (9) verbundenen Widerstand (R_{S}) und einen den Spannungsabfall über diesen Widerstand (R_{S}) erfassenden ersten Komparator (4) aufweist.

16. Resonanter Wechselrichter nach einem der Ansprüche 1 bis 15, dadurch gekennzeichnet,
daß die Spannungserfassungsschaltung (C₁, C₂, 5) anspricht, wenn der Spannungswert des Spannungsabfalls über die elektrische Schaltereinrichtung (S) einen vorgegebenen Spannungswert nahe des Nulldurchganges annimmt, und
daß die Stromerfassungsschaltung (R_{S}, 3, 4) anspricht, wenn der Stromwert des durch die Schaltereinrichtung (S) und/oder den Schwingkreis (C, C₁, L₁) fließenden Stromes einen vorgegebenen Stromwert übersteigt.

17. Resonanter Wechselrichter nach einem der Ansprüche 1 bis 16, dadurch gekennzeichnet,
daß die Stromerfassungsschaltung (R_{S}, 4) wenigstens zwei zueinander versetzte Zeitintervalle pro Zyklus des Stromverlaufes des durch die Schaltereinrichtung (S) und/oder durch den Schwingkreis (C, C₁, L₁) fließenden Stromes detektiert, und
daß die Ansteuerschaltung (1) aufgrund des Vergleichs dieser Zeitintervalle miteinander den Wert der von der Spannungserfassungsschaltung (C₁, C₂, 5) verwendeten Spannungsreferenz ermittelt.

18. Resonanter Wechselrichter nach einem der Ansprüche 1 bis 16, dadurch gekennzeichnet,
daß die Spannungserfassungsschaltung (C₁, C₂, 5) wenigstens zwei zueinander versetzte Zeitintervalle pro Zyklus des Spannungsverlaufes der über die Schaltereinrichtung (5) abfallenden Spannung detektiert, und
daß die Ansteuerschaltung (1) aufgrund des Vergleichs dieser Zeitintervalle miteinander den Wert der von der Stromerfassungsschaltung (R_{S}, 4) verwendeten Stromreferenz ermittelt.

19. Resonanter Wechselrichter nach Anspruch 18, dadurch gekennzeichnet,
daß die Ansteuerschaltung (1) eine als Stromreferenz dienende Referenzspannung derart einstellt, daß der zeitliche Spannungsverlauf der über die Schaltereinrichtung (S) abfallenden Spannung nach Zeitdauer und Amplitude im wesentlichen konstant bleibt, indem zwei hintereinander folgende Zeitintervalle des von Null aus ansteigenden Spannungsverlaufes über die Schaltereinrichtung (S) bezüglich des Erreichens des Amplitudenwertes und eines Zwischenwertes, der größer als Null ist, miteinander verglichen und in einem festen zeitlichen Verhältnis gehalten werden.

20. Resonanter Wechselrichter nach Anspruch 18 oder 19, dadurch gekennzeichnet,
daß die beiden Zeitintervalle durch Abgreifen von drei Zeitpunkten des Spannungsverlaufes definiert werden, wobei ein erster Zeitpunkt durch ein Ausschaltsignal vorgegeben ist, der ein Abschalten der Schaltereinrichtung (S) festlegt, und wobei die beiden weiteren Zeitpunkte durch Schwellenwerte des Spannungsverlaufs festgelegt werden.

21. Resonanter Wechselrichter nach einem der Ansprüche 17 bis 20, dadurch gekennzeichnet,
daß die Spannung über die Schaltereinrichtung (S) durch einen kapazitiven Spannungsteiler (C₁, C₂; Cᵣ₁, Cᵣ₂) abgegriffen wird, welcher bezüglich seines gleichspannungsmäßig hochohmigen Abgriffes mittels einer Klemmeinrichtung (D₁, D₂; D) geklemmt wird.

22. Resonanter Wechselrichter nach Anspruch 21, dadurch gekennzeichnet,
daß die Klemmeinrichtung durch zwei antiparallel geschaltete elektrische Ventile (D1, D2) gebildet wird, die eine vorgegebene Durchbruchspannung größer als Null haben.

23. Resonanter Wechselrichter nach Anspruch 21, dadurch gekennzeichnet,
daß die Klemmeinrichtung durch ein elektrisches Ventil (D) mit vorgegebenen Durchbruchspannungen in beiden Richtungen gebildet wird.

24. Resonanter Wechselrichter nach Anspruch 23, dadurch gekennzeichnet,
daß das elektrische Ventil durch eine Zenerdiode (D) gebildet ist.

25. Resonanter Wechselrichter nach einem der Ansprüche 18 bis 24, gekennzeichnet durch
eine Zeitintervallvergleichseinrichtung (10), welche ein D-Flip-Flop umfaßt, welches im wesentlichen zum Zeitpunkt des Spannungsmaximums oder kurz danach an der Schaltereinrichtung (S) ein Signal (Uᵥ) an einen Zähler (13) weiterleitet, um die Stromreferenz (UBl) zu erhöhen oder zu erniedrigen.

26. Resonanter Wechselrichter nach einem der Ansprüche 1 bis 25, gekennzeichnet durch
eine Wiedereinschalteinrichtung (10,11) , welche ein D-Flip-Flop (11) umfaßt, das durch eine Erzeugerschaltung zum Wiedereinschalten (TO) der Schaltereinrichtung (S) über ein Wiedereinschaltsignal (U_{G1}) gesetzt wird, und welches zum Abschalten der Schaltereinrichtung (S) zurückgesetzt wird.

27. Resonanter Wechselrichter nach einem der Ansprüche 1 bis 26, dadurch gekennzeichent,
daß die Erzeugerschaltung (TO) für das Wiedereinschaltsignal (U_{G1}) eine Zeitintervallvergleichsschaltung (15,33,34,35) ist, welche das Zeitintervall zwischen Abschalten der Schaltereinrichtung (S) und Erreichen des Spannungsmaximums über der Schaltereinrichtung (S) im wesentlichen verdoppelt, um dadurch den Zeitpunkt des Wiedereinschaltens zu ermitteln.

28. Resonanter Wechselrichter nach einem der Ansprüche 1 bis 27, dadurch gekennzeichnet,
daß die Erzeugerschaltung (TO) für das Wiedereinschaltsignal (U_{G1}) einen dritten Komparator (40) in der Spannungserfassungsschaltung verwendet, um aus dessen Ausgangssignal über eine Zeitverzögerung (42) das Wiedereinschaltsignal (U_{G1}) zu erzeugen, wobei der invertierende Eingang des Komparators (40) mit dem Spannungsteilerknoten des Spannungsteilers (Cᵣ₁,Cᵣ₂;C₁,C₂) und der nichtinvertierende Eingang mit einer Bezugsspannungsquelle (U_{RN}) verbunden ist.

29. Resonanter Wechselrichter nach einem der Ansprüche 1 bis 28, dadurch gekennzeichnet,
daß zwischen Stromerfassungsschaltung (R_{S},4) und der Signalerzeugerschaltung (6;11) für das Ausschaltsignal (U_{G}) ein Zeitverzögerungselement (38) geschaltet ist, welches bezüglich seines Wertes (TI) so gewählt ist, daß es zur Linearisierung des Verhältnisses aus der Referenzspannung der Stromerfassungsschaltung (U_{BI}) und der Einschaltdauer der Schaltereinrichtung (S) beiträgt.

30. Resonanter Wechselrichter nach einem der Ansprüche 1 bis 29, dadurch gekennzeichnet,
daß die Zeitintervall-Vergleichseinrichtung (10) Integratorschaltungen (14;15) enthält, welche durch Steuersignale (U_{w};Uₓ) Integratorsignale (U_{ST};U_{SE}) bilden, die durch Umschalten eines Komparators (19;36) eine der zeitlichen Dauer des jeweiligen Steuersignals proportionale Zeitdauer des Komparatorausgangssignals erzeugen, und daß solcher Proportionalitätsfaktor durch das Vehältnis zweier Stromquellen (23,24;28,29) oder durch das Verhältnis zweier Widerstände erzeugt wird.

31. Resonanter Wechselrichter nach einem der Ansprüche 1 bis 30, dadurch gekennzeichnet,
daß antiparallel zur Schaltereinrichtung (S) eine Diode (D_{R}) geschaltet ist, welche den Reversstrom der Schaltereinrichtung (S) übernimmt.

## Claims

1. A resonant inverter of the E class comprising a resonant circuit (C, C₁, L₁), a source (U_{O}), an electronic switch means (S) and a control circuit (1) having the following features:
- a voltage detection circuit (C₁, C₂, 5) responding to a voltage value of the voltage drop across the electric switch means (S) related to a voltage reference;
- a current detection circuit (R_{S}, 3, 4) responding to a current value of the current flowing through the switch means (S) and/or the resonant circuit (C, C₁, L₁), related to a current reference, and
- a control signal generation circuit (6, 7) connected downstream of said voltage detection circuit (C₁, C_{2,} 5) and said current detection circuit (R_{S}, 3, 4) and used for generating a control signal for the electronic switch means (S),
characterized in
that the control signal generation circuit (6, 7) switches the electronic switch means (S) to a first switching state when the voltage detection circuit (C₁, C₂, 5) responds and to a second switching state when the current detection circuit (R_{S}, 3, 4) responds.

2. A resonant inverter according to claim 1, characterized in
that the source comprises a voltage source (U_{O}) and a choke (L) connected in series with said voltage source,
that the resonant circuit is a series-resonant circuit (C, C₁, L₁), and
that the switch means is closed in its first switching state and open in its second switching state.

3. A resonant inverter according to claim 1 or 2, characterized in
that the control circuit (1) controls the electronic switch means (S) in such a way that the ratio (D) of the on time to the period is less than 0.5.

4. A resonant inverter according to claim 3, characterized in
that the control circuit (1) controls the electronic switch means (S) in such a way that the ratio (D) of the on time to the period is between 0.1 and 0.4.

5. A resonant inverter according to claim 3, characterized in
that the control circuit (1) controls the electronic switch means (S) in such a way that the ratio (D) of the on time to the period is between 0.25 and 0,30.

6. A resonant inverter according to one of the claims 1 to 5, characterized in
that the current detection circuit comprises a resistor (R_{S}), which is connected in series to the switch means (S), and a first comparator (4), which detects the voltage drop across this resistor (R_{S}).

7. A resonant inverter according to claim 6, characterized in
that a level shift circuit (3) is connected between the common node of the switch means (S) and the series resistor (R_{S}) and the inverting input of the first comparator (4), and
that the non-inverting input of the first comparator (4) has a reference voltage (U_{BL}, Uᵣ) applied to it.

8. A resonant inverter according to claim 6 or 7, characterized in
that the voltage detection circuit includes a voltage divider (C₁, C₂) parallel to the series connection of the resistor (R_{S}) and the switch means (S).

9. A resonant inverter according to claim 8, characterized in
that the voltage divider is a capacitive voltage divider (C₁, C₂).

10. A resonant inverter according to claim 8, characterized in
that the voltage divider is a resistive voltage divider.

11. A resonant inverter according to one of the claims 8 to 10, characterized in
that the voltage detection circuit additionally comprises a second comparator (5) whose inverting input is connected to the voltage divider node of the voltage divider (C₁, C₂) and whose non-inverting input is connected to a reference voltage source (U_{RO}, Uᵣ).

12. A resonant inverter according to one of the claims 1 to 11, characterized in
that the series resonant circuit (C, C₁, L₁) is in series with an ohmic load (R_{L}) to be driven or in series with an ohmic capacitive load to be driven or in series with an ohmic inductive load to be driven.

13. A resonant inverter according to one of the claims 1 to 12, characterized in
that the switch means comprises a single transistor switch (8).

14. A resonant inverter according to one of the claims 1 to 13, characterized in
that the switch means comprises a field effect transistor (8') having at least two source electrodes.

15. A resonant inverter according to claim 14, characterized in
that the current detection circuit comprises a resistor (R_{S}) connected to one of the source electrodes of the field effect transistor (8'), and a first comparator (4) detecting the voltage drop across this resistor (R_{S}).

16. A resonant inverter according to one of the claims 1 to 15, characterized in
that the voltage detection circuit (C₁, C₂, 5) responds when the voltage value of the voltage drop across the electronic switch means (S) assumes a predetermined voltage value close to the zero passage, and
that the current detection circuit (R_{S}, 3, 4) responds when the current value of the current flowing through the switch means (S) and/or the resonant circuit (C, C₁, L₁) exceeds a predetermined current value.

17. A resonant inverter according to one of the claims 1 to 16, characterized in
that the current detection circuit (R_{S}, 4) detects per cycle of the current curve of the current flowing through the switch means (S) and/or the resonant circuit (C, C₁, L₁) at least two time intervals which are displaced relative to each other, and
that, by comparing these time intervals, the control circuit (1) determines the value of the voltage reference used by the voltage detection circuit (C₁, C₂, 5).

18. A resonant inverter according to one of the claims 1 to 16, characterized in
that the voltage detection circuit (C₁, C₂, 5) detects per cycle of the voltage curve of the voltage dropping across the switch means (5) at least two time intervals which are displaced relative to each other, and
that, by comparing these time intervals, the control circuit (1) determines the value of the current reference used by the current detection circuit (R_{S}, 4).

19. A resonant inverter according to claim 18, characterized in
that the control circuit (1) adjusts a reference voltage, which serves as a current reference, in such a way that the temporal voltage curve of the voltage dropping across the the switch means (S) remains essentially constant with regard to duration and amplitude by comparing two successive time intervals of the curve of the voltage rising from zero across the switch means (S) with regard to the reaching of the amplitude value and an intermediate value, which is larger than zero, and by maintaining them in a fixed ratio to one another.

20. A resonant inverter according to claim 18 or 19, characterized in
that the two time intervals are defined by tapping three instants of the voltage curve, a first instant being predetermined by a switch-off sigal, said instant determining a switching off of the switch means (S), and the two other instants being determined by threshold values of the voltage curve.

21. A resonant inverter according to one of the claims 17 to 20, characterized in
that the voltage across the switch means (S) is tapped by a capacitive voltage divider (C₁, C₂; Cᵣ₁, Cᵣ₂) which is clamped with the aid of a clamping means (D₁, D₂; D) with regard to its dc voltage high ohmic tap.

22. A resonant inverter according to claim 21, characterized in that
the clamping means consist of two electric valves (D1, D2) which are connected anti-parallel and which have a predetermined breakdown voltage above zero.

23. A resonant inverter according to claim 21, characterized in
that the clamping means consist of an electric valve (D) with predetermined breakdown voltages in both directions.

24. A resonant inverter according to claim 23, characterized in
that the electric valve consists of a Zener diode (D).

25. A resonant inverter according to one of the claims 18 to 24, characterized by
a time-interval comparator means (10) comprising a D-type flip-flop transmitting, essentially at the instant the voltage maximum occurs at the switch means (S) or shortly afterwards, a signal (Uᵥ) to a counter (13) in order to increase or decrease the current reference (UB1).

26. A resonant inverter according to one of the claims 1 to 25, characterized by
a reclosing means (10, 11) comprising a D-type flip-flop (11) which is set by means of a generation circuit for reclosing (TO) the switch means (S) via a reclosing signal (U_{G1}) and which is reset for switching off the switch means (S).

27. A resonant inverter according to one of the claims 1 to 26, characterized in
that the generation circuit (TO) for the reclosing signal (U_{G1}) is a time-interval comparison circuit (15, 33, 34, 35) which essentially doubles the time interval elapsing between the instant the switch means (S) is switched off and the instant the voltage maximum across said switch means (S) is reached in order to determine the instant of reclosing.

28. A resonant inverter according to one of the claims 1 to 27, characterized in
that the generation circuit (TO) for the reclosing signal (U_{G1}) uses a third comparator (40) in the voltage detection circuit so as to generate from its output signal and via a time delay (42) the reclosing signal (U_{G1}), the inverting input of said comparator (40) being connected to the voltage divider node of the voltage divider (Cᵣ₁, Cᵣ₂; C₁, C₂) and the non-inverting input being connected to a reference voltage source (U_{RN}).

29. A resonant inverter according to one of the claims 1 to 28, characterized in
that a time delay element (38) is connected between the current detection circuit (R_{S}, 4) and the signal generation circuit (6; 11) for the switch-off signal (U_{G}), the value (TI) of said time delay element (38) being chosen such that it will contribute to the linearization of the ratio of the reference voltage of the current detection circuit (U_{BI}) to the on time of the switch means (S).

30. A resonant inverter according to one of the claims 1 to 29, characterized in
that the time-interval comparator means (10) comprises integrating circuits (14; 15) forming by means of control signals (U_{w}; Uₓ) integrating signals (U_{ST}; U_{SE}) which, by changing over a comparator (19; 36), generate a duration of the comparator output signal which is proportional to the duration of the respective control signal, and that such a proportionality factor is produced by the ratio of two current sources (23, 24; 28, 29) or by the ratio of two resistors.

31. A resonant inverter according to one of the claims 1 to 30, characterized in
that a diode (D_{R}) is switched anti-parallel to the switch means (S), said diode taking over the reverse current of said switch means (S).

## Revendications

1. Onduleur résonnant de la classe E, avec un circuit oscillant (C, C₁, L₁), une source (U₀), un dispositif commutateur électronique (S) et un circuit de commande (1) présentant les caractéristiques suivantes:
- un circuit capteur de tension (C₁, C₂, 5) qui réagit à une valeur de tension de la chute de tension dans le dispositif commutateur électronique (S) par rapport à une référence de tension,
- un circuit capteur de courant (R_{S}, 3, 4) qui réagit à une valeur de courant du courant passant dans le dispositif commutateur (S) et/ou dans le circuit oscillant (C, C₁, L₁) par rapport à une référence de courant, et
- un circuit générateur de signaux de commande (6, 7), connecté après le circuit capteur de tension (C₁, C₂, 5) et le circuit capteur de courant (R_{S}, 3, 4), destiné à générer un signal de commande du dispositif commutateur (S),
caractérisé par le fait que le circuit générateur de signaux de commande (6, 7) amène le dispositif commutateur électronique (S), lors de la réaction du circuit capteur de tension (C₁, C₂, 5), en un premier état de commutation et l'amène, lors de la réaction du circuit capteur de courant (R_{S}, 3, 4), en un second état de commutation.

2. Onduleur résonnant suivant la revendication 1, caractérisé par le fait que la source comprend une source de tension (U₀) avec un étrangleur (L) connecté en série avec celle-ci,
que le circuit oscillant est un circuit oscillant sériel (C, C₁, L₁), et
que le dispositif commutateur est fermé dans son premier état de commutation et ouvert dans son second état de commutation.

3. Onduleur résonnant suivant la revendication 1 ou 2, caractérisé par le fait que le circuit de commande (1) commande le dispositif commutateur électronique (S) de telle manière que le rapport (D) entre le temps d'enclenchement et la période est inférieur à 0,5.

4. Onduleur résonnant suivant la revendication 3, caractérisé par le fait que le circuit de commande (1) commande le dispositif commutateur électronique (S) de telle manière que le rapport (D) entre le temps d'enclenchement et la période est compris entre 0,1 et 0,4.

5. Onduleur résonnant suivant la revendication 3, caractérisé par le fait que le circuit de commande (1) commande le dispositif commutateur électronique (S) de telle manière que le rapport (D) entre le temps d'enclenchement et la période est compris entre 0,25 et 0,30.

6. Onduleur résonnant suivant l'une des revendications 1 à 5, caractérisé par le fait que le circuit capteur de tension présente une résistance (R_{S}) connectée en série avec le dispositif commutateur (S) et un premier comparateur (4) captant la chute de tension dans cette résistance (R_{S}).

7. Onduleur résonnant suivant la revendication 6, caractérisé par le fait
qu'un circuit régulateur de niveau (3) est connecté entre le noeud commun du dispositif commutateur (S) et de la résistance (R_{S}) et l'entrée à inversion du premier comparateur (4), et
que l'entrée sans inversion du premier comparateur (4) est soumise à l'admission d'une tension de référence (U_{BL}, Uᵣ).

8. Onduleur résonnant suivant la revendication 6 ou 7, caractérisé par le fait que le circuit capteur de tension présente un diviseur de tension (C₁, C₂) parallèle à la commutation en série de la résistance (R_{S}) et du dispositif commutateur (S).

9. Onduleur résonnant suivant la revendication 8, caractérisé par le fait que le diviseur de tension est un diviseur de tension capacitif (C₁, C₂).

10. Onduleur résonnant suivant la revendication 8, caractérisé par le fait que le diviseur de tension est un diviseur de tension à résistance.

11. Onduleur résonnant suivant l'une des revendications 8 à 10, caractérisé par le fait que le circuit capteur de tension présente, par ailleurs, un second comparateur (5) dont l'entrée à inversion est reliée au noeud diviseur de tension du diviseur de tension (C₁, C₂) et son entrée sans inversion à une source de tension de référence (U_{RO}, Uᵣ).

12. Onduleur résonnant suivant l'une des revendications 1 à 11, caractérisé par le fait que le circuit oscillant sériel (C, C₁, L₁) se situe en série avec une charge ohmique (R_{L}) à exciter ou en série avec une charge ohmique-capacitive ou en série avec une charge ohmique-inductive.

13. Onduleur résonnant suivant l'une des revendications 1 à 12, caractérisé par le fait que le dispositif commutateur présente un seul commutateur à transistor (8).

14. Onduleur résonnant suivant l'une des revendications 1 à 13, caractérisé par le fait que le dispositif commutateur présente un transistor à effet de champ (9) avec au moins deux électrodes de source.

15. Onduleur résonnant suivant la revendication 14, caractérisé par le fait que le circuit capteur de courant présente une résistance (R_{S}) reliée à l'une des électrodes de source du transistor à effet de champ (9) et un premier comparateur (4) captant la chute de tension à cette résistance (R_{S}).

16. Onduleur résonnant suivant l'une des revendications 1 à 15, caractérisé par le fait
que le circuit capteur de tension (C₁, C₂, 5) réagit lorsque la valeur de tension de la chute de tension dans le dispositif commutateur électrique (S) adopte une valeur de tension prédéterminée près du passage du zéro, et
que le circuit capteur de courant (R_{S}, 3, 4) réagit lorsque la valeur de courant du courant circulant dans le dispositif commutateur (S) et/ou dans le circuit oscillant (C, C₁, L₁) excède une valeur de courant prédéterminée.

17. Onduleur résonnant suivant l'une des revendications 1 à 15, caractérisé par le fait
que le circuit capteur de courant (R_{S}, 4) détecte au moins deux intervalles de temps décalés entre eux par cycle de l'évolution de courant du courant circulant dans le dispositif commutateur (S) et/ou dans le circuit oscillant (C, C₁, L₁), et
que le circuit de commande (1) détermine, sur base de la comparaison entre eux de ces intervalles de temps, la valeur de la référence de tension utilisée par le circuit capteur de tension (C₁, C₂, 5).

18. Onduleur résonnant suivant l'une des revendications 1 à 16, caractérisé par le fait
que le circuit capteur de tension (C₁, C₂, 5) détecte au moins deux intervalles de temps décalés entre eux par cycle de l'évolution de tension de la tension tombant dans le dispositif commutateur (5), et
que le circuit de commande (1) détermine, sur base de la comparaison entre eux de ces intervalles de temps, la valeur de la référence de tension utilisée par le circuit capteur de courant (R_{S}, 4).

19. Onduleur résonnant suivant la revendication 18, caractérisé par le fait que le circuit de commande (1) règle une tension de référence servant de référence de courant de telle manière que l'évolution de tension dans le temps de la tension tombant dans le dispositif commutateur (S) reste sensiblement constante en durée et amplitude en comparant entre eux et en maintenant selon un rapport fixe dans le temps deux intervalles de temps successifs de l'évolution de la tension dans le dispositif commutateur (S) montant à partir de zéro par rapport au moment où est atteinte la valeur d'amplitude et une autre valeur intermédiaire qui est supérieure à zéro.

20. Onduleur résonnant suivant la revendication 18 ou 19, caractérisé par le fait que les deux intervalles de temps sont définis par la prise de trois moments, un premier moment étant prédéterminé par un signal de déclenchement qui détermine un déclenchement du dispositif commutateur (S) et les deux autres moments étant fixés par des valeurs de seuil de l'évolution de la tension.

21. Onduleur résonnant suivant l'une des revendications 17 à 20, caractérisé par le fait que la tension dans le dispositif commutateur (S) est prise par un diviseur de tension capacitif (C₁, C₂; Cᵣ₁, Cᵣ₂) qui est bloqué quant à sa prise fort ohmique à tension continue à l'aide d'un dispositif de blocage (D₁, D₂; D).

22. Onduleur résonnant suivant la revendication 21, caractérisé par le fait que le dispositif de blocage est constitué par deux soupapes électriques (Dl, D2) connectées anti-parallèles qui ont une tension de percée prédéterminée supérieure à zéro.

23. Onduleur résonnant suivant la revendication 21, caractérisé par le fait que le dispositif de blocage est constitué par une soupape électrique (D) à tensions de percées prédéterminées dans les deux directions.

24. Onduleur résonnant suivant la revendication 23, caractérisé par le fait que la soupape électrique est constituée par une diode Zener (D).

25. Onduleur résonnant suivant l'une des revendications 18 à 24, caractérisé par un dispositif comparateur d'intervalles de temps (10) qui comporte un flip-flop D qui transmet, sensiblement au moment du maximum de tension au dispositif commutateur (S) ou peu après, un signal (U_{V}) à un compteur (13), pour élever ou abaisser la référence de courant (UB1).

26. Onduleur résonnant suivant l'une des revendications 1 à 25, caractérisé par un dispositif de réenclenchement (10, 11) qui comporte un flip-flop D (11) qui est établi par un circuit générateur pour réenclencher (TO) le dispositif commutateur (S) par l'intermédiaire d'un signal de réenclenchement (U_{G1}) et qui est rétabli pour déclencher le dispositif commutateur (S).

27. Onduleur résonnant suivant l'une des revendications 1 à 26, caractérisé par le fait que le circuit générateur (TO) du signal de réenclenchement (U_{G1}) est un signal comparateur d'intervalles de temps (15, 33, 34, 35) qui double sensiblement l'intervalle de temps entre le déclenchement du dispositif commutateur (S) et le moment où est atteint le maximum de tension dans le dispositif commutateur (S), pour ainsi déterminer le moment du réenclenchement.

28. Onduleur résonnant suivant l'une des revendications 1 à 27, caractérisé par le fait que le circuit générateur (TO) du signal de réenclenchement (U_{G1}) utilise un troisième comparateur (40) dans le circuit capteur de tension, pour générer à partir de son signal de sortie, par l'intermédiaire d'une temporisation (42), le signal de réenclenchement (U_{G1}), l'entrée à inversion du comparateur (40) étant reliée au noeud diviseur de tension du diviseur de tension (Cᵣ₁, Cᵣ₂; C₁, C₂) et l'entrée sans inversion à une source de tension de référence (URN).

29. Onduleur résonnant suivant l'une des revendications 1 à 28, caractérisé par le fait qu'entre le circuit capteur de courant (R_{S}, 4) et le circuit générateur (6; 11) du signal de déclenchement (U_{G}) est connecté un élément temporisateur (38) qui est, quant à sa valeur (TI), choisi de telle manière qu'il contribue à la linéarisation du rapport entre la tension de référence du circuit capteur de courant (U_{BI}) et la durée d'enclenchement du dispositif commutateur (S).

30. Onduleur résonnant suivant l'une des revendications 1 à 29, caractérisé par le fait que le dispositif comparateur d'intervalles de temps (10) comporte des circuits intégrateurs (14; 15) qui, par des signaux de commande (U_{w}; Uₓ), forment des signaux intégrateurs qui, par la commutation d'un comparateur (19; 36), génèrent une période du signal de sortie du comparateur proportionnelle à la période de temps du signal de commande en question et qu'un tel facteur de proportionnalité est généré par le rapport entre deux sources de courant (23, 24; 28, 29) ou par le rapport entre deux résistances.

31. Onduleur résonnant suivant l'une des revendications 1 à 30, caractérisé par le fait qu'une diode (D_{R}) qui reprend le courant inversé du dispositif commutateur (S) est connectée anti-parallèle au dispositif commutateur (S).
